(19) Europäisches Patentamt / European Patent Office / Office européen des brevets

(11) **EP 4 352 722 B1**

(12) **FASCICULE DE BREVET EUROPEEN**

(45) Date de publication et mention
de la délivrance du brevet:
**10.09.2025 Bulletin 2025/37**

(21) Numéro de dépôt: **22735550.0**

(22) Date de dépôt: **08.06.2022**

(51) Classification Internationale des Brevets (IPC):
*G10K 11/172* (2006.01)   *B64C 1/40* (2006.01)
*B32B 3/12* (2006.01)   *B32B 3/08* (2006.01)
*B64D 33/02* (2006.01)

(52) Classification Coopérative des Brevets (CPC):
**G10K 11/172; B32B 3/085; B32B 3/12;
B64D 33/02;** B32B 2307/102; B64D 2033/0206

(86) Numéro de dépôt international:
**PCT/FR2022/051084**

(87) Numéro de publication internationale:
**WO 2022/258921 (15.12.2022 Gazette 2022/50)**

(54) **DISPOSITIF DE TRAITEMENT ACOUSTIQUE POUR ENSEMBLE PROPULSIF D'AERONEF ET SON PROCEDE DE FABRICATION**

AKUSTISCHE BEHANDLUNGSVORRICHTUNG FÜR EINE FLUGZEUGANTRIEBSANORDNUNG UND VERFAHREN ZU IHRER HERSTELLUNG

ACOUSTIC TREATMENT DEVICE FOR AN AIRCRAFT PROPULSION ASSEMBLY, AND ITS METHOD OF MANUFACTURE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.06.2021 FR 2106052**

(43) Date de publication de la demande:
**17.04.2024 Bulletin 2024/16**

(73) Titulaire: **SAFRAN
75015 Paris (FR)**

(72) Inventeurs:
• **LANFANT, Nicolas Pierre
77550 MOISSY-CRAMAYEL (FR)**
• **ALGLAVE, Hugues Laurent
77550 MOISSY-CRAMAYEL (FR)**
• **DUNLEAVY, Patrick
77550 MOISSY-CRAMAYEL (FR)**

(74) Mandataire: **Gevers & Orès
Immeuble le Palatin 2
3 Cours du Triangle
CS 80165
92939 Paris La Défense Cedex (FR)**

(56) Documents cités:
**US-A1- 2013 133 977    US-A1- 2015 027 629
US-A1- 2018 230 905    US-A1- 2020 265 821**

## Description

## Domaine technique de l'invention

L'invention est relative au domaine du traitement acoustique dans les aéronefs et se rapporte, en particulier, à un dispositif de traitement acoustique pour ensemble propulsif d'aéronef et à son procédé de fabrication.

## Arrière-plan technique

L'état de la technique comprend notamment les documents US-A1-2020/265821, US-A1-2015/0027629, US-A1-2018/0230905 et US-A1-2013/0133977.

Pour le traitement acoustique dans les aéronefs, et en particulier pour atténuer les ondes acoustiques qui se propagent dans les différentes structures d'un aéronef, il est connu d'utiliser des dispositifs de traitement acoustique qui se présentent sous la forme d'un « sandwich » dans lequel deux peaux enserrent une structure alvéolaire, typiquement une structure en nid d'abeille, dont les propriétés sont adaptées pour atténuer les ondes acoustiques dans une plage de fréquence donnée.

Ce type de dispositif de traitement acoustique est classiquement destiné à être monté sur des pièces d'un ensemble propulsif comprenant une nacelle et un moteur d'aéronef comme. Il peut être monté, par exemple, sur des panneaux de nacelle, sur des panneaux de moteur ou encore sur des plateformes situées entre des aubes de stator ou des aubes de rotor.

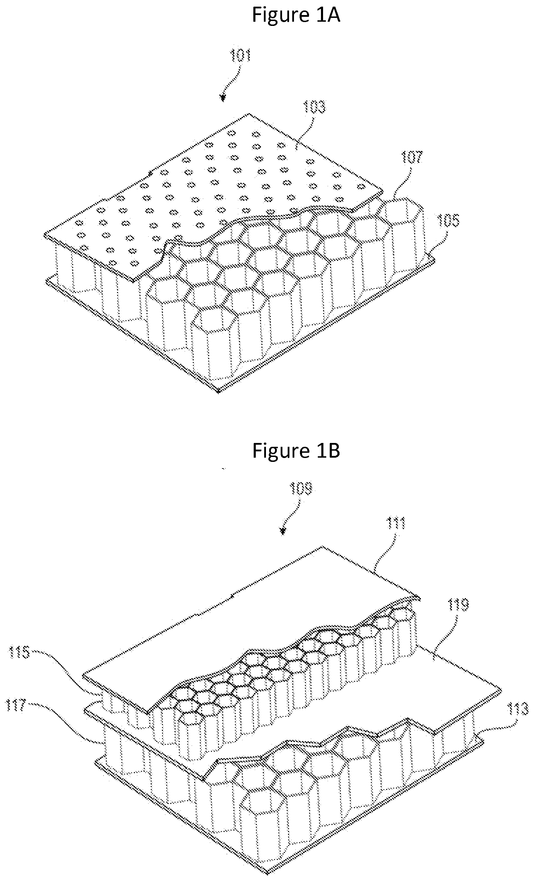

La figure 1A illustre un exemple de dispositif de traitement acoustique 101 dans lequel deux plaques 103 et 105 en matériau composite, c'est-à-dire les peaux du dispositif de traitement acoustique, sont assemblées par collage à une structure en nid d'abeille 107.

De manière connue, la structure en nid d'abeille 107 est composée de cellules creuses, de section hexagonale, disposées selon une disposition périodique. De plus, la peau 103 du dispositif de traitement acoustique, généralement appelée peau acoustique, est poreuse pour améliorer ses performances acoustiques alors que l'autre peau 105 ne l'est pas et est simplement une peau dite de fermeture.

Les performances acoustiques d'un tel dispositif sont principalement liées à sa structure alvéolaire et, en particulier, la gamme de fréquence dans laquelle les ondes acoustiques sont atténuées par le dispositif découle notamment de la géométrie et des dimensions des cellules de la structure alvéolaire.

En particulier, dans les technologies de traitement acoustique classique, la longueur du col est faible devant la hauteur de la cavité de la structure alvéolaire. Plus précisément, dans les technologies classiques, la longueur du col est égale à l'épaisseur d'une paroi en tôle composite (carbone + résine) qui constitue la surface mouillée du traitement, car le col est obtenu par simple perforation de cette paroi.

Le fonctionnement du résonateur de Helmholtz ainsi constitué est optimisé en dimensionnant la cavité d'air de façon à obtenir le maximum de vitesse acoustique au niveau du col. Cette optimisation impose des hauteurs de cavité de l'ordre du quart de la longueur d'onde de la fréquence principale à traiter. Ce qui représente pour une onde sonore à une fréquence de 100 Hz dans l'air ambient ayant donc une longueur d'onde de 3,4 mètre, une hauteur de cavité nécessaire de :

[Math 1]

$$\frac{\lambda}{4} = \frac{3,4}{4} = 0,85m$$

Elle offre par ailleurs des propriétés très intéressantes quant à l'importante largeur de bande fréquentielle couverte.

Cependant, les tendances actuelles pour l'optimisation des systèmes de propulsion sont orientées vers la diminution des nombres d'aubes et la réduction de la vitesse de rotation des ensembles tournants tels que le fan (soufflante) dans les architectures carénées (par exemple, un turboréacteur désigné par le terme anglais « turbofan ») et/ou les hélices dans les architectures non-carénées (par exemple, un moteur à soufflante non carénée, notamment une double soufflante contrarotative non carénée ou « contra-rotating open rotor » en anglais). Il en résulte un abaissement des fréquences du rayonnement acoustique.

L'optimisation des panneaux de traitement nécessite alors l'augmentation de leur épaisseur pour pouvoir augmenter la hauteur de la cavité et ainsi diminuer la fréquence d'accord des cavités résonantes des panneaux. Cela rend les panneaux incompatibles avec les contraintes de masse et d'encombrement associées aux nouvelles architectures de type UHBR (Ultra High Bypass Ratio), c'est-à-dire à très fort taux de dilution.

En effet, la mise en place de traitements acoustiques conventionnels sans cône et accordés à ces fréquences requiert des cavités d'épaisseurs de 20 à 25 cm. Et, avec des tailles de nacelles dites minces et une signature acoustique démarrant à des fréquences particulièrement basses, les turboréacteurs à très fort taux de dilution ne peuvent pas utiliser de tels panneaux de traitement acoustique et nécessitent donc l'utilisation de revêtements acoustiques spécifiques. Plus précisément, en complément des structures absorbantes classiques traitant les moyennes et hautes fréquences, il y a un besoin de traitement acoustique pouvant atténuer efficacement les fréquences basses de l'ordre de 150 à 800 Hz avec des panneaux de traitement acoustique présentant un encombrement réduit.

Il est toujours possible de dimensionner le résonateur de Helmholtz de sorte qu'il soit efficace sur des fréquences plus basses, pour un encombrement radial réduit, par exemple, en jouant à la fois sur la hauteur du col et sur le volume de la cavité résonante.

La contrepartie, pour ce type de dimensionnement sous contrainte d'un encombrement réduit donné, est que la bande de fréquence sur laquelle agit le traitement de manière optimale se trouve drastiquement réduite lorsque la fréquence diminue. En effet l'insertion d'un cône dans les cavités résonantes en nid d'abeille permet d'augmenter la hauteur du col et donc de ramener la hauteur de la cellule à 7 ou 8 cm plutôt que les 20 à 25 cm de hauteur pour une cellule sans cône interne.

En outre, les méthodes de fabrication connues restreignent les possibilités de géométries utilisables pour les cellules à des structures en nid d'abeille telles que celle représentée à la figure 1A. Par conséquent, la gamme de fréquences accessible (pour l'atténuation acoustique) est intrinsèquement limitée.

Une approche possible pour élargir la gamme de fréquences dans laquelle les ondes acoustiques sont atténuées est l'empilement de plusieurs structures alvéolaire ayant des cellules de dimensions différentes et donc destinées à générer une atténuation acoustique dans des gammes de fréquences différentes.

Comme l'illustre la figure 1B, le dispositif de traitement acoustique 109 est alors constitué de deux peaux 111 et 113 et de deux structures alvéolaires 115 et 117 distinctes séparées par une couche intermédiaire 119 qui est une couche poreuse également appelée « septum ». Ce type d'empilement est appelé DDOF (de l'anglais *« Double Degree Of Freedom »*) par opposition à une structure simple, comme représentée à la figure 1A, désignée par l'acronyme SDOF (de l'anglais *« Single Degree Of Freedom »).*

Ces approches sont toutefois elles aussi limitées dans la mesure où, pour générer une atténuation acoustique dans les basses fréquences, elles requièrent d'augmenter significativement la hauteur des cellules creuses de la structure alvéolaire et donc l'épaisseur totale du dispositif de traitement acoustique. Or, le respect de certaines contraintes d'encombrement et en particulier le fait de ne pas impacter la trainée d'un ensemble propulsif empêche d'élargir le dispositif de traitement acoustique au-delà de certaines limites.

Pour remédier à ce problème, il est connu d'intégrer au dispositif de traitement acoustique des formes conçues spécifiquement pour atténuer les basses fréquences sans augmenter l'épaisseur totale du dispositif de manière significative. Typiquement, des formes saillantes, comme par exemple des cônes, sont insérés dans les cellules de la structure alvéolaire. La forme et les dimensions précises des formes utilisées étant adaptée pour générer une atténuation acoustique dans une gamme de fréquence donnée.

Une approche connue consiste ainsi à insérer des cônes dans les cellules de la structure alvéolaire de manière discrète. Cette approche est toutefois limitée en termes de surface utile pouvant être traitée et, par conséquent, de performance acoustique dans le mesure où le nombre de cônes détermine le niveau d'atténuation acoustique obtenu.

Une autre approche connue consiste également en l'intégration de cônes (qui s'insèrent également dans des alvéoles) liés entre eux par des barrettes. Dans ce cas, dans la pratique, le jeu existant entre lesdits cônes et les cellules de la structure alvéolaire tend à détériorer les performances acoustiques du dispositif. En effet, il est nécessaire de positionner les barrettes dans des entailles d'une structure alvéolaire, ce qui impose un contrôle géométrique très complexe.

Une dernière approche consiste à introduire dans le dispositif, une structure formée d'une plaque de laquelle émerge des cônes. Ces cônes s'insèrent dans les alvéoles (i.e. dans les cellules) de la structure alvéolaire lorsque le dispositif est assemblé. Ce type de structure est notamment fabriqué par injection ou compression et permet d'obtenir un dispositif de traitement acoustique de faible épaisseur et capable d'atténuer les basses fréquences.

Toutefois cette dernière approche est également limitée par le fait que, pour permettre la fixation du dispositif de traitement acoustique à une pièce d'un ensemble propulsif, il est nécessaire de combler certaines cellules de la structure alvéolaire afin de faire passer des moyens de fixation qui permettent l'assemblage.

En particulier, l'assemblage du dispositif requiert de remplir certaines cellules de la structure alvéolaires par un enduit, une résine ou encore par un mastic. Cette opération, appelée *« potting »*, présente plusieurs inconvénients :

Premièrement, il s'agit d'une opération additionnelle dans le processus de fabrication. Deuxièmement elle implique nécessairement un temps de séchage. Et, troisièmement, elle souffre d'imprécision entraînant le fait que plus de cellules que nécessaire sont remplies *in fine*.

En conséquence, elle engendre un surcoût de production et une perte de surface traitée du fait de l'imprécision de l'application du mastic, de l'enduit ou de la résine.

**Résumé de l'invention**

La présente invention propose une solution à ces inconvénients.

À cet effet, selon un premier aspect, l'invention concerne un dispositif de traitement acoustique pour un ensemble propulsif d'aéronef, ce dispositif comprenant une première peau et une seconde peau enserrant une structure acoustique, ladite structure acoustique comprenant une structure alvéolaire, comportant une pluralité de cellules creuses, et une structure de formes, comportant une pluralité de formes saillantes, et pour que chacune desdites formes saillantes s'insère dans une cellule creuse différente de la structure alvéolaire, ledit dispositif de traitement acoustique étant caractérisé en ce que ladite structure de formes comporte en outre au moins un plot, d'une forme distincte de celle des formes saillantes, ce plot étant conçu pour s'encastrer dans au moins une cellule creuse de la structure alvéolaire et pour permettre la fixation du dispositif de traitement acoustique à une pièce de l'ensemble propulsif d'aéronef.

Le dispositif de traitement acoustique selon l'invention peut comprendre une ou plusieurs des caractéristiques suivantes, prises isolément les unes des autres ou en combinaison les unes avec les autres :

- les dimensions de chaque plot de la structure de formes sont conçues pour que chaque plot s'encastre dans une cellule creuse différente de la structure alvéolaire.
- les dimensions de chaque plot de la structure de formes sont conçues pour que chaque plot s'encastre dans une zone creuse de la structure alvéolaire formée de plusieurs cellules creuses voisines.
- chaque plot comporte un trou traversant conçu pour permettre le passage de moyens de fixation.
- chaque trou comporte un usinage, par exemple un alésage, un fraisage ou un lamage, adapté pour permettre l'insertion d'une tête des moyens de fixation de sorte que ladite tête des moyens de fixation n'émerge pas dudit trou.

L'invention concerne également, selon un second aspect, un ensemble propulsif d'aéronef, comportant au moins un dispositif de traitement acoustique selon le premier aspect.

L'invention concerne enfin, selon un troisième aspect, un procédé de fabrication d'un dispositif de traitement acoustique selon le premier aspect, comprenant :

- la fabrication de la structure de formes ;
- l'assemblage de la structure de formes avec la structure alvéolaire de manière à former la structure acoustique ; et,
- l'assemblage de la structure acoustique avec la première peau et la seconde peau de manière à former le dispositif de traitement acoustique.

Le procédé de fabrication selon l'invention peut comprendre une ou plusieurs des caractéristiques suivantes, prises isolément les unes des autres ou en combinaison les unes avec les autres :

- le procédé comprend en outre le perçage du dispositif de traitement acoustique au niveau des plots de la structure de formes.
- lors de la fabrication de la structure de formes, des trous sont formés dans les plots de ladite structure de formes à partir de parties saillantes d'un moule ou d'inserts positionnés dans un moule.
- lors de la fabrication de la structure de formes, les plots de ladite structure de formes sont réalisés avec un insert positionné dans un moule.

## Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :

[Fig. 1A] la figure 1A est une représentation schématique d'un mode de réalisation d'un disposition de traitement acoustique selon l'art antérieur;
[Fig. 1B] la figure 1B est une représentation schématique d'un mode de réalisation d'un disposition de traitement acoustique selon l'art antérieur;
[Fig. 2] la figure 2 est un schéma de principe de l'assemblage du structure acoustique selon un mode de réalisation de l'invention ;
[Fig. 3] la figure 3 est une représentation schématique d'une mode de réalisation d'une structure de formes selon l'invention ;
[Fig. 4] la figure 4 est un schéma de principe de l'assemblage d'un dispositif de traitement acoustique selon un mode de réalisation de l'invention ;
[Fig. 5A] la figure 5A est une représentation schématique d'une mode de réalisation d'une structure de formes selon l'invention ;
[Fig. 5B] la figure 5B est une représentation schématique d'une mode de réalisation d'une structure de formes selon l'invention ;
[Fig. 6A] la figure 6A est une représentation schématique d'une mode de réalisation d'une structure de formes selon l'invention ;
[Fig. 6B] la figure 6B est une représentation schématique d'une mode de réalisation d'une structure de formes selon l'invention ;
[Fig. 7A] la figure 7A est une représentation schématique d'une mode de réalisation d'une structure de formes selon l'invention ;
[Fig. 7B] la figure 7B est une représentation schématique d'une mode de réalisation d'une structure de formes selon l'invention ;
[Fig. 8A] la figure 8A est une représentation schématique d'une mode de réalisation d'une structure de formes selon l'invention ;
[Fig. 8B] la figure 8B est une représentation schématique d'une mode de réalisation d'une structure de formes selon l'invention ;
[Fig. 9] la figure 9 est une représentation schématique d'une mode de réalisation d'une structure de formes selon l'invention ; et,
[Fig. 10] la figure 10 est un diagramme d'étapes d'une mode de mise en œuvre d'un procédé de fabrication d'un dispositif de traitement acoustique selon l'invention.

Les éléments ayant les mêmes fonctions dans les différents modes de réalisation ont les mêmes références dans les figures.

## Description détaillée de l'invention

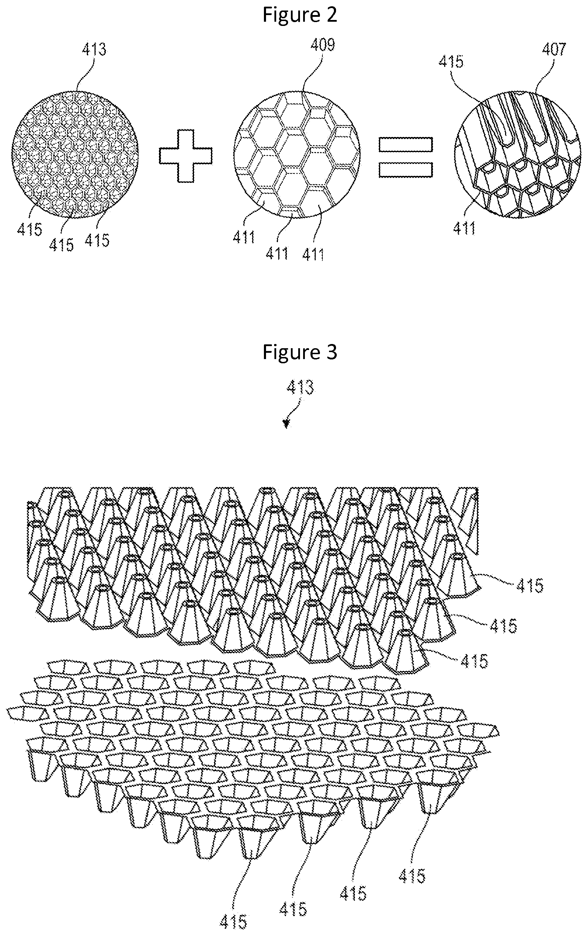

En référence aux figures 2 à 5, nous allons maintenant décrire un dispositif de traitement acoustique selon un mode de réalisation de l'invention.

Le dispositif de traitement acoustique 401 est conçu pour être monté sur une pièce d'un ensemble propulsif d'aéronef. Un tel ensemble comprend une nacelle d'aéronef et un moteur d'aéronef et une telle pièce peut être, par exemple, un panneau de nacelle, un panneau de moteur, une plateforme entre des aubes de stator ou entre des aubes de rotor.

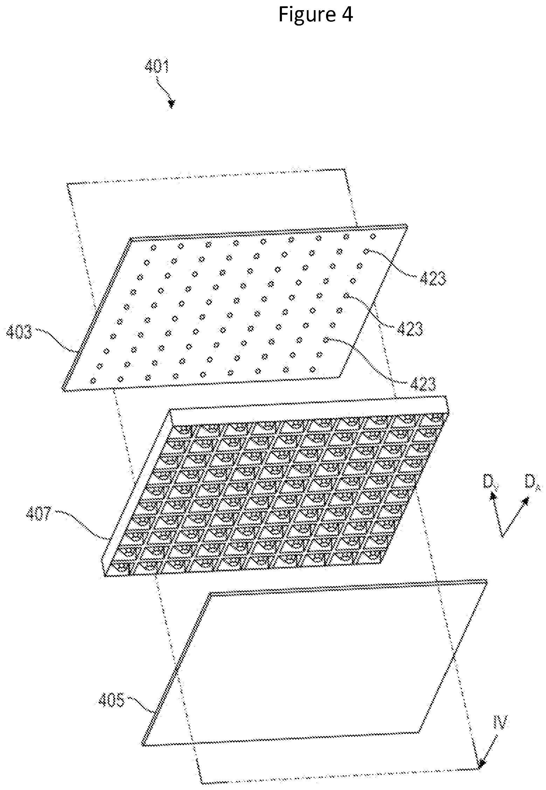

Le dispositif 401 comprend une première peau 403 et une seconde peau 405 qui enserrent une structure acoustique 407. La première peau 403 et la seconde peau 405 peuvent être, par exemple, des plaques en matériau composite. En outre, comme il est visible à la figure 4, dans l'exemple représenté, la première peau 403 est poreuse, c'est-à-dire qu'elle est percée par des orifices 423 dans le but d'améliorer ses propriétés acoustiques.

Comme il est plus particulièrement visible à la figure 2, la structure acoustique 407 comprend une structure alvéolaire 409 qui comporte une pluralité de cellules creuses 411 et une structure de formes 413 qui comporte une pluralité de formes saillantes 415.

Dans l'exemple représenté, la structure alvéolaire 409 est une structure en nid d'abeille qui comporte des cellules creuses 411 de section hexagonale disposées selon une disposition périodique. Ce sont ces cellules creuses 401 (i.e. les alvéoles) qui sont conçues pour générer une atténuation acoustique dans une gamme de fréquence donnée.

En outre, les formes saillantes 415 de la structure de formes 413 sont des cônes qui sont eux aussi disposés selon une disposition périodique, identique à celle des cellules 411 de la structure alvéolaire 409, et dont les dimensions sont adaptées pour que chaque cône s'insère dans une cellule creuse 411 différente de la structure alvéolaire 409 lorsque le dispositif de traitement acoustique 401 est assemblé. Les cônes sont conçus pour générer, en association avec la structure alvéolaire, une atténuation acoustique dans une gamme de fréquence distincte de celle de la structure alvéolaire seule. En particulier, il peut s'agir de basses fréquences qui ne sont pas suffisamment atténuées par la structure alvéolaire seule.

L'invention n'est pas limitée à une structure de formes dans laquelle les formes saillantes sont des cônes. La géométrie des formes saillantes peut être, dans différents modes de réalisation, pyramidale, en spirale, en entonnoir, ou encore en trémie. L'homme du métier saura adapter cette forme à une atténuation recherchée dans une gamme de fréquence donnée et/ou à des propriétés mécaniques données recherchées.

La structure de formes peut être fabriquée, par exemple, à partir de matières thermoplastiques telles que du PAEK (polyaryletherketone), du PEI (polyetherimide), du PC (polycarbonate), du PPS (polyphenylene sulfide) ou encore du PESU (polyethersulfone). Elle peut avoir des dimensions variables, par exemple, de l'ordre de 1000 par 500 millimètres carrés et plusieurs structures de formes peuvent être assemblées entre elles pour en former une plus grande le cas échéant, par exemple, par collage ou par soudage (par ultrason ou par laser notamment).

En outre, à titre d'exemple, la hauteur des formes saillantes de la structure de formes peut être comprise entre 5 et 100 millimètres et les dimensions de la base (i.e. la zone située au niveau de la plaque) de ces formes saillantes peuvent être inclues dans un cercle de diamètre compris entre 5 et 50 millimètres. Enfin, l'épaisseur du matériau constituant la forme saillante, peut être comprise entre 0,3 et 0,5 millimètre.

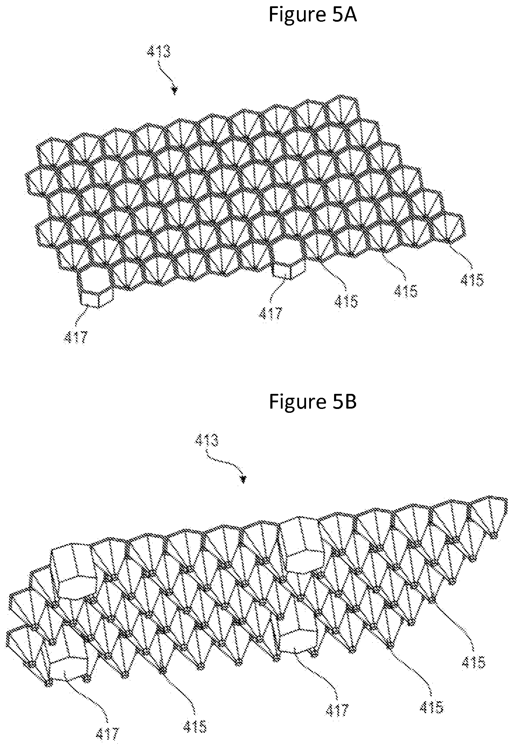

Comme il est plus particulièrement visible à la figure 5A et à la figure 5B, la structure de formes 413 comporte également des plots 417, qui ont une forme distincte de celle des formes saillantes 415.

Les plots 417 sont conçus pour s'encastrer dans les cellules creuses 411 (positionnées en vis-à-vis au moment de l'assemblage) de la structure alvéolaire 409. Ainsi, dans l'exemple représenté, les plots 417 ont une section hexagonale et des dimensions qui permettent cet encastrement.

De manière générale, la forme et la disposition des plots 417 sont adaptées pour permettre leur encastrement dans les cellules creuses y compris dans le cas où les formes des cellules et des plots diffèrent.

Ainsi la structure alvéolaire 409 et la structure de formes 413 s'assemblent pour former la structure acoustique 407 en insérant les formes saillantes 415 dans certaines cellules creuses 411 et en encastrant les plots 417 dans d'autres cellules creuses 411 de la structure alvéolaire 409. En particulier, lors de l'assemblage de la structure alvéolaire 409 et de la structure de formes 413, les plots 417 s'encastrant dans des cellules creuses 411 guident la structure de formes 413 avec au moins une partie de leurs dimensions externes qui sont conçues pour s'ajuster exactement aux dimensions internes des cellules creuses 411 en vis-à-vis.

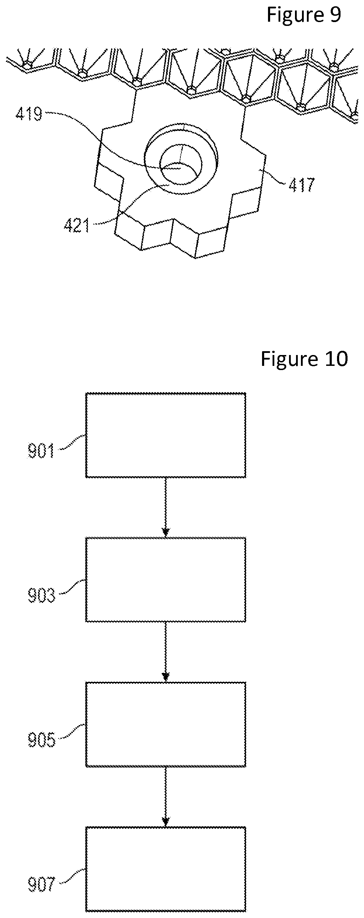

Comme décrit plus loin plus en détail en référence à la figure 10, c'est cette structure alvéolaire qui est assemblée avec les deux peaux pour former les dispositifs de traitement acoustique complet. A titre d'exemple, la hauteur totale du dispositif de traitement acoustique, une fois assemblé, peut être de l'ordre de 30 millimètres.

En outre, les plots 417 sont conçus pour permettre la fixation du dispositif de traitement acoustique 401 dans son ensemble à une pièce de l'ensemble propulsif d'aéronef. En particulier, les plots peuvent être pleins ou suffisamment remplis pour que la matière de chaque plot constitue un élément de support pour des moyens de fixation.

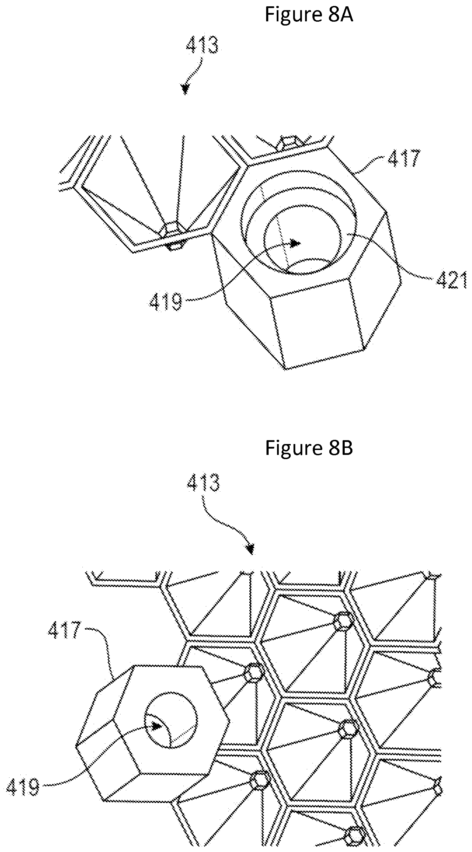

Par exemple, comme il est visible à la figure 8A et à la figure 8B, qui représentent un mode de réalisation particulier, chaque plot 417 peut comporter un trou traversant 419 conçu pour permettre le passage de moyens de fixation comme par exemple une vis.

En outre, dans cet exemple, le trou 419 comporte un usinage 421, qui peut être par exemple un alésage, un fraisage ou un lamage, et qui est adapté pour permettre l'insertion d'une tête des moyens de fixation de sorte que cette tête n'émerge pas du trou 419. Ainsi, avantageusement, aucune partie des moyens de fixation ne risque d'entraver un flux aérodynamique lorsque le dispositif de traitement acoustique 401 est monté à proximité d'une veine de circulation d'un flux.

Dans une variante non représentée, chaque plot 417 peut également comporter un insert fileté qui est conçu pour permettre sa fixation à la pièce de l'ensemble propulsif d'aéronef à laquelle il est destiné à être fixé. Dans ce cas, la fixation à la pièce de l'ensemble propulsif se fait par l'arrière. La tête de vis est alors du côté d'un carter par exemple.

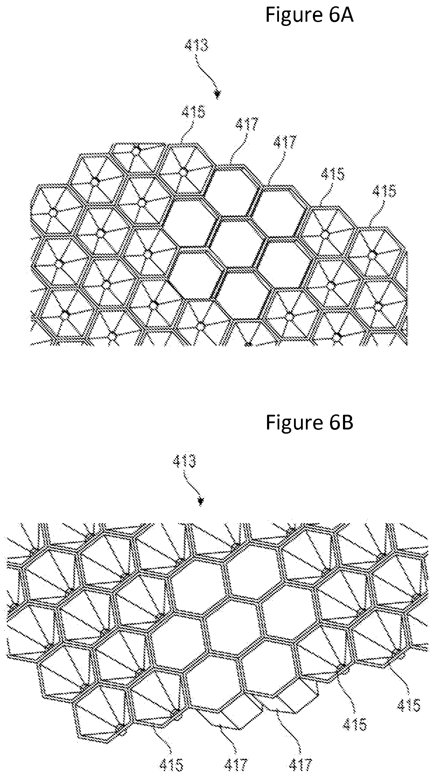

La figure 6A et à la figure 6B représentent un mode de réalisation dans lequel plusieurs plots 417 individuels sont disposés de sorte qu'ils s'encastrent dans des cellules 411 voisines de la structure alvéolaire.

De manière générale, dans les modes de réalisation représentés aux figures 5A et 5B d'une part et, 6A et 6B d'autre part, les dimensions de chaque plot 417 de la structure de formes 413 sont conçues pour que chaque plot 417 s'encastre dans une cellule creuse 411 différente de la structure alvéolaire 409. Dit autrement, toutes les cellules creuses 411 de la structure alvéolaire 409 ont les mêmes dimensions et chaque plot 417 a des dimensions adaptées pour s'encastrer dans une cellule unique.

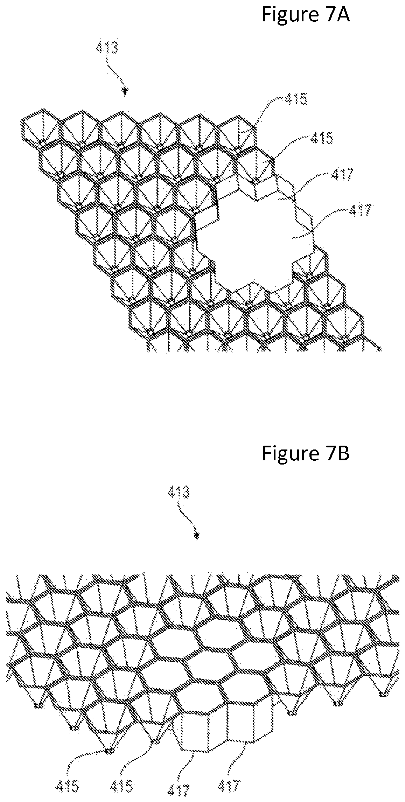

Dans un mode de réalisation alternatif, tel que représenté à la figure 7A et à la figure 7B, les dimensions de chaque plot 417 de la structure de formes 413 sont conçues pour que chaque plot 417 s'encastre dans une zone creuse de la structure alvéolaire 409 formée de plusieurs cellules creuses 411 voisines. Typiquement, une zone formée de plusieurs cellules creuses 411 identiques de la structure alvéolaire 409 doit avoir été découpée au préalable pour permettre l'encastrement d'un plot 417 unique.

En outre, dans ce cas comme dans celui où chaque plot s'encastre dans une cellule unique, comme il est visible à la figure 9, chaque plot 417 peut comporter un trou traversant 419 conçu pour permettre le passage de moyens de fixation comme par exemple une vis.

De même chaque plot 417 peut comporter un usinage 421, qui peut être par exemple un alésage, un fraisage ou un lamage, et qui est adapté pour permettre l'insertion d'une tête des moyens de fixation de sorte que cette tête n'émerge pas du trou 419. En référence à la figure 10, nous allons maintenant décrire un procédé de fabrication d'un dispositif de traitement acoustique tel que celui décrit en référence aux figures 2 à 9.

L'étape 901 consiste en la fabrication de la structure de formes. En particulier, dans différents modes de mise en œuvre du procédé de fabrication, la structure de formes peut être fabriquée, par exemple, par injection ou par estampage et surmoulage ou encore par fabrication additive. L'injection désigne l'injection d'une résine thermoplastique chargée ou non dans un moule fermé. L'estampage et surmoulage désigne l'utilisation d'une feuille thermoplastique, chargée ou non qui est embouti pour former les plots.

L'étape 903 consiste en l'assemblage de la structure de formes avec la structure alvéolaire pour former la structure acoustique. Cet assemblage peut être réalisé, par exemple, par collage ou par soudage.

L'étape 905 consiste en l'assemblage de la structure acoustique avec la première peau et la seconde peau pour former le dispositif de traitement acoustique complet. De la même façon que pour l'étape 903, cet assemblage peut être réalisé, par exemple, par collage ou par soudage.

L'homme du métier appréciera que les opérations d'assemblage de la structure de formes avec la structure alvéolaire et de la structure acoustique avec la première peau et la seconde peau peuvent être interverties dans le procédé de fabrication.

En outre, dans l'exemple non-limitatif représenté, le procédé de fabrication comprend également une étape 907 de perçage du dispositif de traitement acoustique au niveau des plots de la structure de formes afin de former les trous qui permettront de faire passer les moyens de fixation.

Alternativement ou de manière complémentaire, il est possible que, lors de l'étape 901 de fabrication de la structure de formes, les trous soient formés dans les plots de la structure de formes soit à partir de parties saillantes d'un moule qui sert à ladite fabrication soit à partir d'inserts qui sont positionnés dans le moule.

Enfin, dans un mode de mise en œuvre particulier du procédé de fabrication, lors de l'étape 901 de la fabrication de la structure de formes, les plots peuvent être réalisés avec un insert positionné dans un moule. Avantageusement, il peut ainsi s'agir d'un moule « classiquement » utilisé pour la fabrication d'une structure de formes sans plot auquel dans lequel il suffit de placer des inserts pour permettre la fabrication des plots.

## Revendications

1. Dispositif de traitement acoustique (401) pour un ensemble propulsif d'aéronef, ce dispositif comprenant une première peau (403) et une seconde peau (405) enserrant une structure acoustique (407), ladite structure acoustique (407) comprenant une structure alvéolaire (409), comportant une pluralité de cellules creuses (411), et une structure de formes (413), comportant une pluralité de formes saillantes (415), et pour que chacune desdites formes saillantes (415) s'insère dans une cellule creuse (411) différente de la structure alvéolaire (409),

   ledit dispositif de traitement acoustique (401) étant **caractérisé en ce que** ladite structure de formes (413) comporte en outre au moins un plot (417), d'une forme distincte de celle des formes saillantes (415), ce plot (417) étant conçu pour s'encastrer dans au moins une cellule creuse (411) de la structure alvéolaire (409) et pour permettre la fixation du dispositif de traitement acoustique (401) à une pièce de l'ensemble propulsif d'aéronef.

2. Dispositif de traitement acoustique (401) selon la revendication 1, dans lequel les dimensions de chaque plot (417) de la structure de formes (413) sont conçues pour que chaque plot (417) s'encastre dans une cellule creuse (411) différente de la structure alvéolaire (409).

3. Dispositif de traitement acoustique (401) selon la revendication 1, dans lequel les dimensions de chaque plot (417) de la structure de formes (413) sont conçues pour que chaque plot (417) s'encastre dans une zone creuse de la structure alvéolaire (409) formée de plusieurs cellules creuses (411) voisines.

4. Dispositif de traitement acoustique (401) selon l'une quelconque des revendications précédentes, dans lequel chaque plot (417) comporte un trou traversant (419) conçu pour permettre le passage de moyens de fixation.

5. Dispositif de traitement acoustique (401) selon la revendication 4, dans lequel chaque trou (419) comporte un usinage (421), par exemple un alésage, un fraisage ou un lamage, adapté pour permettre l'insertion d'une tête des moyens de fixation de sorte que ladite tête des moyens de fixation n'émerge pas dudit trou (419).

6. Ensemble propulsif d'aéronef, comportant au moins un dispositif de traitement acoustique selon l'une des revendications précédentes.

7. Procédé de fabrication d'un dispositif de traitement acoustique (401) selon l'une quelconque des revendications 1 à 5, comprenant :

    - la fabrication (901) de la structure de formes ;
    - l'assemblage (903) de la structure de formes avec la structure alvéolaire de manière à former la structure acoustique ; et,
    - l'assemblage (905) de la structure acoustique avec la première peau et la seconde peau de manière à former le dispositif de traitement acoustique.

8. Procédé de fabrication selon l'une quelconque des revendications précédentes, comprenant en outre :

    - le perçage (907) du dispositif de traitement acoustique au niveau des plots de la structure de formes.

9. Procédé de fabrication selon l'une quelconque des revendications précédentes, dans lequel, lors de la fabrication (901) de la structure de formes, des trous sont formés dans les plots de ladite structure de formes à partir de parties saillantes d'un moule ou d'inserts positionnés dans un moule.

10. Procédé de fabrication selon l'une quelconque des revendications précédentes, dans lequel, lors de la fabrication (901) de la structure de formes, les plots de ladite structure de formes sont réalisés avec un insert positionné dans un moule.


**Patentansprüche**

1. Vorrichtung zur akustischen Behandlung (401) für eine Flugzeugantriebsanordnung, wobei diese Vorrichtung eine erste Haut (403) und eine zweite Haut (405) umfasst, die eine akustische Struktur (407) umschließen, wobei die akustische Struktur (407) eine Wabenstruktur (409), die eine Vielzahl von Hohlzellen (411) umfasst, und eine Formenstruktur (413) umfasst, die eine Vielzahl von vorspringenden Formen (415) umfasst, und so, dass sich jede der vorspringenden Formen (415) in eine von der Wabenstruktur (409) verschiedene Hohlzelle (411) einfügt,
wobei die Vorrichtung zur akustischen Behandlung (401) **dadurch gekennzeichnet ist, dass** die Formenstruktur (413) weiter mindestens einen Zapfen (417) umfasst, der eine Form aufweist, die sich von der der vorspringenden Formen (415) unterscheidet, wobei dieser Zapfen (417) so konzipiert ist, dass er sich in mindestens eine Hohlzelle (411) der Wabenstruktur (409) einsenken und die Befestigung der Vorrichtung zur akustischen Behandlung (401) an einem Teil der Flugzeugantriebsanordnung ermöglichen kann.

2. Vorrichtung zur akustischen Behandlung (401) nach Anspruch 1, wobei die Abmessungen jedes Zapfens (417) der Formenstruktur (413) so konzipiert sind, dass sich jeder Zapfen (417) in eine von der Wabenstruktur (409) verschiedene Hohlzelle (411) einsenkt.

3. Vorrichtung zur akustischen Behandlung (401) nach Anspruch 1, wobei die Abmessungen jedes Zapfens (417) der Formenstruktur (413) so konzipiert sind, dass sich jeder Zapfen (417) in einen Hohlbereich der Wabenstruktur (409), der von mehreren benachbarten Hohlzellen (411) gebildet wird, einsenkt.

4. Vorrichtung zur akustischen Behandlung (401) nach einem der vorstehenden Ansprüche, wobei jeder Zapfen (417) ein Durchgangsloch (419) umfasst, das so konzipiert ist, dass es den Durchtritt von Befestigungsmitteln ermöglicht.

5. Vorrichtung zur akustischen Behandlung (401) nach Anspruch 4, wobei jedes Loch (419) eine Bearbeitung (421), zum Beispiel eine Bohrung, eine Fräsung oder eine Senkung, umfasst, die geeignet ist, das Einsetzen eines Kopfes der Befestigungsmittel zu ermöglichen, sodass der Kopf der Befestigungsmittel nicht aus dem Loch (419) herausragt.

6. Flugzeugantriebsanordnung, die mindestens eine Vorrichtung zur akustischen Behandlung nach einem der vorstehenden Ansprüche umfasst.

7. Verfahren zur Herstellung einer Vorrichtung zur akustischen Behandlung (401) nach einem der Ansprüche 1 bis 5, umfassend:

  - das Herstellen (901) der Formenstruktur;
  - das Zusammenfügen (903) der Formenstruktur mit der Wabenstruktur, um die akustische Struktur zu bilden; und
  - das Zusammenfügen (905) der akustischen Struktur mit der ersten Haut und der zweiten Haut, um die Vorrichtung zur akustischen Behandlung zu bilden.

8. Herstellungsverfahren nach einem der vorstehenden Ansprüche, weiter umfassend:

  - das Durchbohren (907) der Vorrichtung zur akustischen Behandlung im Bereich der Zapfen der Formenstruktur.

9. Herstellungsverfahren nach einem der vorstehenden Ansprüche, wobei bei der Herstellung (901) der Formenstruktur Löcher in den Zapfen der Formenstruktur auf Grundlage von vorspringenden Teilen einer Form oder von Einsätzen, die in einer Form positioniert werden, gebildet werden.

10. Herstellungsverfahren nach einem der vorstehenden Ansprüche, wobei bei der Herstellung (901) der Formenstruktur die Zapfen der Formenstruktur mit einem Einsatz hergestellt werden, der in einer Form positioniert wird.

**Claims**

1. An acoustic treatment device (401) for an aircraft propulsion assembly, this device comprising a first skin (403) and a second skin (405) enclosing an acoustic structure (407), said acoustic structure (407) comprising a cellular structure (409), comprising a plurality of hollow cells (411), and a structure of shapes (413), comprising a plurality of protruding shapes (415), and so that each of said protruding shapes (415) engages in a different hollow cell (411) of the cellular structure (409),
said acoustic treatment device (401) being **characterised in that** said structure of shapes (413) further comprises at least one stub (417), of a shape distinct from that of the protruding shapes (415), this stub (417) being designed to fit into at least one hollow cell (411) of the cellular structure (409) and to enable the acoustic treatment device (401) to be fixed to a component of the aircraft propulsion assembly.

2. The acoustic treatment device (401) according to claim 1, wherein the dimensions of each stub (417) of the structure of shapes (413) are designed so that each stub (417) fits into a different hollow cell (411) of the cellular structure (409).

3. The acoustic treatment device (401) according to claim 1, wherein the dimensions of each stub (417) of the structure of shapes (413) are designed so that each stub (417) fits into a hollow area of the cellular structure (409) formed by several adjacent hollow cells (411).

4. The acoustic treatment device (401) according to any one of the preceding claims, wherein each stub (417) comprises a through hole (419) designed to allow fastening means to pass through.

5. The acoustic treatment device (401) according to claim 4, wherein each hole (419) comprises a machined portion (421), for example a bore, milling or counterbore, adapted to allow the engagement of a head of the fastening means so that said head of the fastening means does not emerge from said hole (419).

6. An acoustic propulsion assembly comprising at least one acoustic treatment device according to one of the preceding claims.

7. A method of manufacturing an acoustic treatment device (401) according to any one of claims 1 to 5, comprising:

  - manufacturing (901) the structure of shapes;
  - mounting (903) the structure of shapes with the cellular structure to form the acoustic structure; and,
  - mounting (905) the acoustic structure with the first skin and the second skin so as to form the acoustic treatment device.

8. The manufacturing method according to any one of the preceding claims, further comprising:

- drilling (907) the acoustic treatment device at the level of the stubs of the structure of shapes.

9. The manufacturing method according to any one of the preceding claims, wherein, during the manufacture (901) of the structure of shapes, holes are formed in the stubs of said structure of shapes from protruding parts of a mould or from inserts positioned in a mould.

10. The manufacturing method according to any one of the preceding claims, wherein, during the manufacture (901) of the structure of shapes, the stubs of said structure of shapes are made with an insert positioned in a mould.

## Figure 1A

## Figure 1B

# Figure 2

# Figure 3

Figure 4

Figure 5A

Figure 5B

Figure 6A

Figure 6B

Figure 7A

Figure 7B

Figure 8A

Figure 8B

Figure 9

Figure 10

**RÉFÉRENCES CITÉES DANS LA DESCRIPTION**

**Documents brevets cités dans la description**

- US 2020265821 A1
- US 20150027629 A1
- US 20180230905 A1
- US 20130133977 A1